# EUROPEAN PATENT SPECIFICATION

(11) **EP 0 745 874 B1**
(45) Date of publication and mention of the grant of the patent: **16.10.2002**
(21) Application number: 96108794.7
(22) Date of filing: 31.05.1996
(51) Int. Cl.: G02B 6/38

(54) **An adhesive agent injecting jig**
Einspritzröhrchen für Kleber
Tube d'injection d'agent adhésif

(30) Priority: 02.06.1995 JP 13696295
(43) Date of publication of application: 04.12.1996
(73) Proprietor: SEIKO INSTRUMENTS INC., Chiba-shi, Chiba 261 (JP)
(72) Inventor: Nakajima,Masahiro , c/o Seiko Instruments Inc., Mihama-ku, Chiba-shi, Chiba (JP); Kumaoh,Masahiko , c/o Seiko Instruments Inc., Mihama-ku, Chiba-shi, Chiba (JP); Hata,Yuhkou , c/o Seiko Instruments Inc., Mihama-ku, Chiba-shi, Chiba (JP)
(74) Representative: Rupprecht, Kay, Dipl.-Ing.

(56) References cited:
- EP-A- 0 330 399
- EP-A- 0 432 947
- EP-A- 0 690 320
- US-A- 5 222 169
- US-A- 5 285 510

## Description

The present invention relates to an adhesive agent injecting jig for injecting an adhesive agent according to claim 1.

Generally, as an optical fiber for used in a transmission of optical signals, one or more optical fibers are used through connecting means such as connectors, welding and splices. There are many cases in which are used optical fiber cables each having a high strength body for protecting a coated optical fiber from an influence to a transmission of optical signals such as disturbance and a sheath such as PVC, and also used are optical fiber connectors. The optical fiber is usually made of brittle components such as glass, etc., a diameter of which is thin as 0.1 mm. Usually, nylon is sheathed around the optical fiber, which forms a coated optical fiber having a diameter of about 1 mm. At the time of the assembling of the optical fiber cables and the optical fiber connectors, if the optical fiber connectors and the coated fiber of the optical fiber cable receive the local bending load due to the compression, the optical signal transmitted therethrough is subjected to the influence upon the transmission loss such as the leak of the optical signal to the outside, and the disconnection of the optical transmission due to the breakage of the coated optical fiber, etc., according to the optical characteristics.

Conventionally, when the optical fiber is fixed to a ferrule as a cylindrical member having a penetrating hole at a center thereof, which constitutes an optical fiber connector, it is general to use an adhesive agent, and the optical fiber connector is assembled as follows:

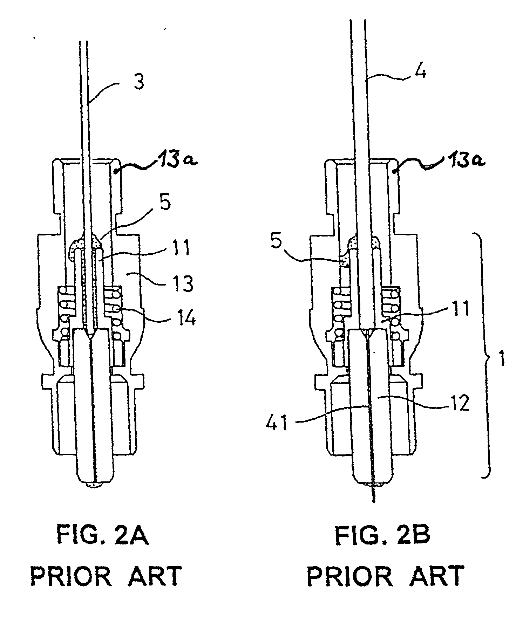

Figs. 2A and 233 are sectional views showing processes of a conventional optical fiber connector assembling method. They show an optical fiber connector assembling method in which an injection needle 3 is inserted directly into a rear portion of a ferrule. In Fig. 2A, the injection needle 3 is inserted into a rear portion 11 of the cylindrical member through which the optical fiber passes, so that an adhesive agent 5 is injected thereinto. Next, a coated optical fiber 4 in which an optical fiber 41 is exposed at a tip portion thereof is inserted through a tail portion of a ferrule 1, so that the coated portion 4 of the optical fiber and the optical fiber 41 are fixed to the ferrule 1 (Fig. 2B).

Up to now, there has been a problem that the amount of the adhesive agent must be controlled, while confirming the tail portion of the ferrule, in such a manner that the adhesive agent overflows from the tail portion of the ferrule which is located at an inmost portion of a connector housing 13. Since the rear end portion of the ferrule is located at the inmost portion of the housing of the optical connector, there has been another problem that a removing operation of the overflowed adhesive agent is impossible. There has been still another problem that the ferrule cannot be moved in the axial direction, since the overflowed adhesive agent is flowed into a location intermediate between the rear portion 11 of the ferrule and the housing 13, and a location on which a coil spring 14 is mounted, and therefore, the ferrule is fixed firmly to the inside of the housing.

Document EP 0 690 320 A1 already shows an optical fiber connector assembly including a housing and a ferrule assembly, which consists of a ferrule and a plug. The task of this invention is to removably assemble a tube with a connector assembly to facilitate applying epoxy interiorly of a pre-assembled connector.

Document EP 0 432 947 A1 discloses a connector assembly with a plastic or ceramic alignment ferrule, a housing, and a sheath . The sheath is used to prevent leakage of an adhesive from the surrounding members.

Document EP 0 330 399 discloses a connector assembly which includes a ceramic alignment ferrule, a metal body and a sheath for preventing leakage of an adhesive from the body. The sheath is mounted around the metal body, thereby elongating the through hole of the metal body and as a result preventing leakage of an adhesive without a crimp.

The object of present invention is to provide an adhesive agent injecting jig and an optical fiber connector allowing an adhesive agent to be surely injected into a rear portion of the ferrule for fixing a coated optical fiber to the ferrule, and by which an overflow of the adhesive to a periphery of the ferrule is avoided.

This object is achieved by an adhesive agent injecting jig for injecting an adhesive agent showing the features of claim 1.

Preferred embodiments are specified in the dependent claims. The assembly of an optical fiber connector according to the present invention using the adhesive agent injecting jig thereby comprises the steps of fitting the adhesive agent injecting jig without a gap around a tail portion of the ferrule to thereby fix the same thereto, injecting the adhesive agent through the adhesive agent injecting jig by the injector, removing the adhesive agent injecting jig from the tail portion of the ferrule, and inserting a coated optical fiber which is exposed at a tip portion thereof, through the tail portion of the ferrule, to thereby fix the same to the ferrule.

According to the above-mentioned adhesive agent injecting jig of the optical fiber connector, the adhesive agent injection is made easy. The adhesive agent can be confirmed on a disk-like portion of the adhesive agent injecting jig at the time of the adhesive agent injecting, so that the adhesive agent cannot be fitted to the other portion if the adhesive agent is stopped to be injected at that time. Besides, the portion attached to the tail portion of the ferrule is contacted closely to an inner surface and an outer surface of the tail portion of the ferrule, so that the adhesive agent is overflowed at the contacting portion thereof. Further, due to the jig being inserted into the tail portion of the ferrule, if the optical fiber is inserted thereinto, the adhesive is not overflowed, and therefore, a uniform injecting amount of the adhesive agent can be realized.

In the following, some examples not falling within the scope of the attached claims and preferred embodiments of the invention will be described in detail with reference to the drawings, which show:
- Fig. 1A-1D: are sectional views of processes of an optical fiber connector assembling method.
- Fig. 2A and 2B: are sectional views of processes of a conventional optical fiber connector assembling method.
- Fig. 3A and 3B: are sectional views of processes of an optical fiber connector assembling method.
- Fig. 4A-4D: are sectional views of processes of an optical fiber connector assembling method usable in the invention.
- Fig. 5: is a sectional view of an adhesive agent injecting apparatus according to the invention.
- Fig. 6: is a perspective view showing another comparative example of an adhesive agent injecting apparatus.

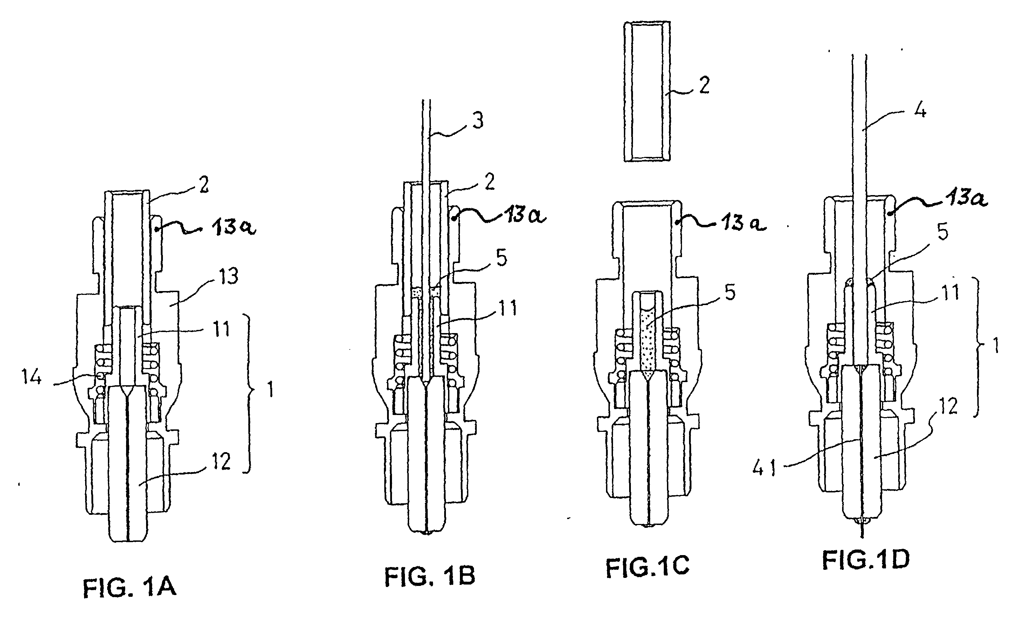

Figs. 1, 3 and 4 exhibit sectional views showing processes of optical fiber connector assembling methods. Figs. 1A to D are sectional views showing processes of an optical connector assembling method in which an hollow cylindrical member is used. In Fig. 1A, reference numeral 12 denotes a ferrule fore portion, 11 is a ferrule rear potion, 14 is a coil spring, and 13 is a housing of an optical connector. The ferrule fore portion 12 has a penetrating hole to which the optical fiber is inserted and fixed. Further, the ferrule rear portion 11 has a penetrating hole into which is inserted the coated portion of the optical fiber having a diameter larger than that of the penetrating hole. In Fig. 1A, a hollow cylindrical member 2 is fitted without a gap into or around a tail-portion of the ferrule 1 which is a cylindrical member (Fig. 1A), an injecting needle 3 of an injector is inserted through the tail portion of the hollow cylindrical member 2, an adhesive agent 5 is injected into the cylindrical ferrule rear portion 11 (Fig. IB), and the hollow cylindrical member 2 is removed (Fig. 1C). Next, a coated optical fiber 4 in which an optical fiber 41 is exposed at a tip portion thereof is inserted through the tail portion of the ferrule 1 to be fixed thereto (Fig. ID).

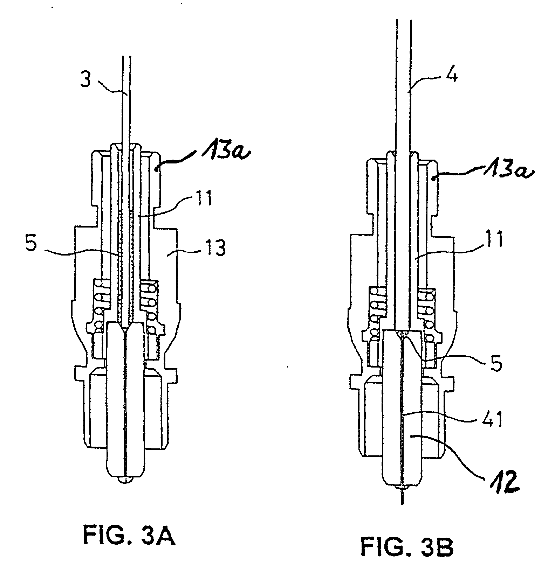

Figs. 3A and B are sectional views showing processes of an optical connector assembling method in which the injecting needle 3 is directly inserted into the ferrule rear portion 11. Here, the injecting needle 3 is inserted through the tail portion of the ferrule rear portion 11 which elongates so as to project from the rear end portion of the housing 13, then the adhesive agent 5 is injected thereinto (Fig. 3A). Next, the coated optical fiber 4 in which the optical fiber 41 is exposed at a leading end portion thereof is inserted through the tail portion of the ferrule 1 to thereby be fixed thereto (Fig. 3B).

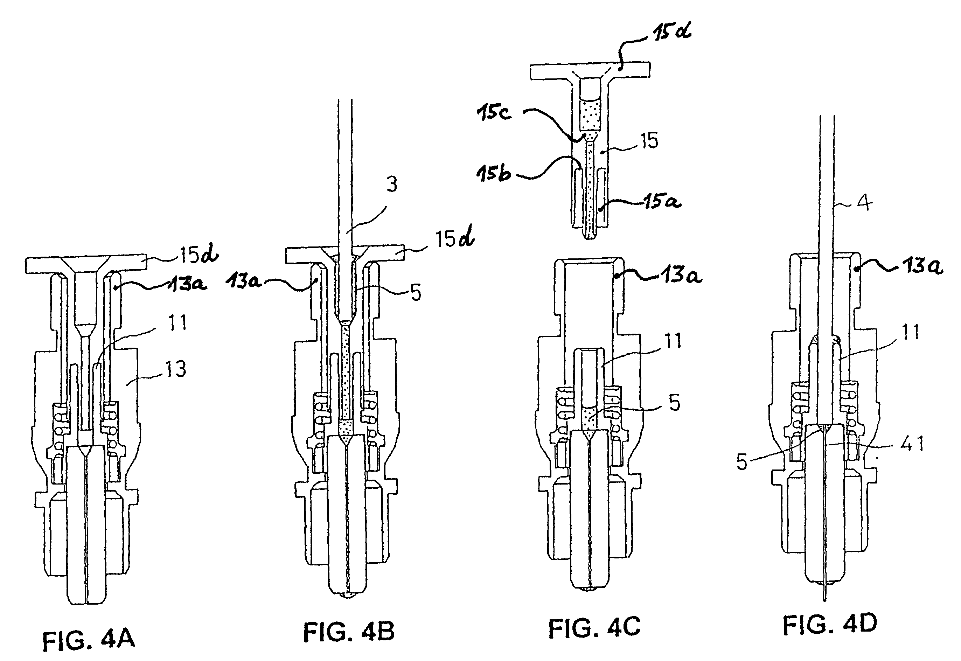

Figs. 4A to D are sectional views showing processes of an optical fiber connector assembling method usable in the invention. Now, the steps of optical fiber connector assembling method shown in Fig. 4 will be described.
(1) The adhesive agent injecting jig 15 is inserted into the rear end portion of the ferrule rear portion 11 mounted in the simple connector housing 13 (Fig. 4A). On this occasion, it is pushed firmly thereinto without a gap between the disk portion of the adhesive agent injecting jig 15 and the rear end portion of the housing 13 in such a manner that the fore end portion of the injecting jig is inserted into the rear end portion of the ferrule with close contact.
(2) The injecting needle 3 is inserted into the jig through the receiving port of the rear end portion of the adhesive agent injecting jig 15, then the adhesive agent is injected thereinto. The adhesive agent 15 is injected up to the receiving port of the adhesive agent injecting jig (Fig. 4B).
(3) The adhesive agent injecting jig 15 is removed from the tail portion of the ferrule (Fig. 4C).
(4) The coated optical fiber which is exposed at a leading end portion thereof is inserted through the tail portion of the ferrule to be fixed thereto. Thus, the adhesive agent can be injected without overflow.

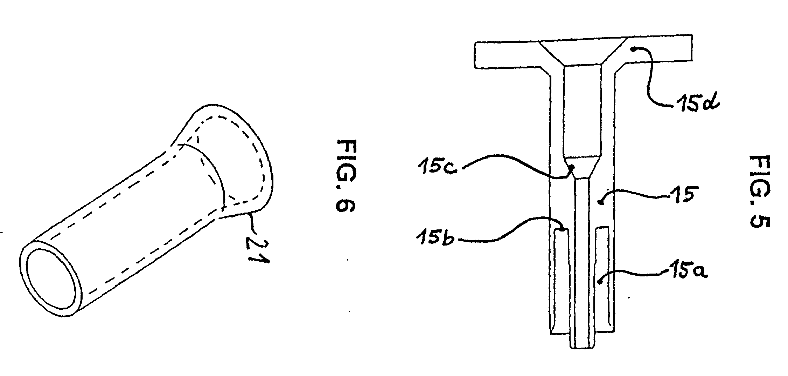

Fig. 5 is a sectional view of a hollow cylindrical adhesive agent injecting jig 15 used in Fig. 4. As shown in Fig. 5, the adhesive agent injecting jig 15 has a double wall construction at an inserted portion which is to be inserted into the tail portion of the ferrule. Due to such a construction, it is held stably to the tail portion of the ferrule and the adhesive agent is hardly to leak. Also, the inlet portion into which the injecting needle is inserted has an adhesive agent receiving port. Due to this receiving port, the adhesive agent cannot overflow and thereby not adhere to the main body of the connector.

Fig. 6 shows a comparative example of an adhesive agent injecting jig in which the receiving port is funnel-shaped with a cone-shaped inlet port.

As described above, the optical connector according to the invention has an advantage that the injection can be facilitated and the adhesive agent is hard to leak by using the cylindrical adhesive agent injecting jig for adhering and fixing the optical fiber connector of the ferrule and the optical fiber with a proper quantity of the adhesive agent injected. Further, the adhesive agent is prevented from leaking from the adhesive agent injecting jig by arranging the flange-like receiving port of the adhesive agent to the end portion of the injecting jig. Also, the portion which is inserted into the tail portion of the ferrule is made into the double construction, so that the holding of the inserted portion to the ferrule is firm and the adhesive agent cannot be overflowed from the inserted portion and fitted to the other portion. Also, the same effect as those in a case where the above-mentioned cylindrical injecting jig is used can be obtained by elongating the rear end portion of the ferrule of the optical fiber connector, so as to project from the tail portion of the housing.

## Claims

1. An adhesive agent injecting jig for injecting an adhesive agent (5) into a second penetrating hole of a cylindrically-shaped ferrule (1) of an optical fiber connector, said connector comprising said ferrule and a housing portion (13) for containing said ferrule (1), said ferrule having at a fore portion (12) thereof a first penetrating hole for receiving and fixing an optical fiber (41) therein, and having at a rear end portion (11) thereof said second penetrating hole having a diameter larger than that of said first penetrating hole,
**characterized in that**
said jig being a hollow cylindrical member (15) consisting at a fore end of two concentrically arranged annular walls (15a), said walls (15a) of said hollow cylindrical member (15) being fittable respectively into and around the rear end portion (11) of said ferrule (1).

2. An adhesive agent injecting jig according to claim 1,
**characterized in that**
the cavity separating the two annular walls of said double wall construction (15a) terminates at its rear end in a transverse wall (15b).

3. An adhesive agent injecting jig according to claim 1 or 2,
**characterized in that**
the through-channel of said hollow cylindrical member (15) comprises a forward portion and a rearward portion, the forward portion having a smaller inner diameter than the rearward portion, said two portions being divided by a frusto-conical portion (15c).

4. An adhesive agent injecting jig according to any of the preceding claims,
**characterized in that**
the rear end of the through-channel of said hollow cylindrical member (15) has a frusto-conical shaped adhesive receiving port.

5. An adhesive agent injecting jig according to any of the preceding claims,
**characterized in that**
said jig has at its rearward end a disk-like flange (15d) for engaging with the rearward end of said ferrule (1).

## Patentansprüche

1. Einspritzvorrichtung für einen Kleber zum Einspritzen eines Klebers (5) in ein zweites Durchgangsloch einer zylinderförmigen Anschlusshülse (1) eines Lichtwellenleiter-Steckverbinders, wobei dieser Steckverbinder diese Anschlusshülse und einen Gehäuseabschnitt (13) zur Aufnahme der Anschlusshülse (1) aufweist, und wobei diese Anschlusshülse an einem vorderen Abschnitt (12) ein erstes Durchgangsloch zur Aufnahme und Befestigung eines Lichtwellenleiters (41) darin und an einem hinteren Endabschnitt (11) das zweite Durchgangsloch mit einem größeren Durchmesser als das erste Durchgangsloch hat,
**dadurch gekennzeichnet, dass**
die Vorrichtung ein hohlzylindrisches Element (15) ist, das an einem vorderen Ende aus zwei konzentrisch angeordneten ringförmigen Wänden (15a) besteht, wobei diese Wände (15a) des hohlzylindrischen Elements (15) jeweils in den bzw. um den hinteren Endabschnitt (11) der Anschlusshülse (1) eingesetzt bzw. angebracht werden können.

2. Einspritzvorrichtung für einen Kleber gemäß Anspruch 1,
**dadurch gekennzeichnet, dass**
der die beiden ringförmigen Wände der Doppelwandkonstruktion (15a) trennende Hohlraum an seinem hinteren Ende an einer Querwand (15b) endet.

3. Einspritzvorrichtung für einen Kleber gemäß Anspruch 1 oder 2,
**dadurch gekennzeichnet, dass**
der Durchgangskanal durch das hohlzylindrische Element (15) einen vorderen Abschnitt und einen hinteren Abschnitt aufweist, wobei der vordere Abschnitt einen kleineren Innendurchmesser als der hintere Abschnitt hat, und die beiden Abschnitte durch einen kegelstumpfförmigen Abschnitt (15c) geteilt sind.

4. Einspritzvorrichtung für einen Kleber gemäß einem der vorstehenden Ansprüche,
**dadurch gekennzeichnet, dass**
das hintere Ende des Durchgangskanals des hohlzylindrischen Elements (15) eine kegelstumpfförmige Öffnung zur Aufnahme des Klebers hat.

5. Einspritzvorrichtung für einen Kleber gemäß einem der vorstehenden Ansprüche,
**dadurch gekennzeichnet, dass**
die Vorrichtung an ihren hinteren Ende einen scheibenartigen Flansch (15d) zum Eingriff in das hintere Ende der Anschlusshülse (1) hat.

## Revendications

1. Tête d'injection pour produit adhésif, destinée à injecter un produit adhésif (5) dans un deuxième trou de pénétration d'une virole (1) de forme cylindrique d'un connecteur de fibre optique, ledit connecteur comprenant ladite virole et une partie formant boîtier (13) pour contenir ladite virole (1), ladite virole ayant, au niveau d'une partie antérieure (12) d'elle-même, un premier trou de pénétration pour recevoir et fixer une fibre optique (41) à l'intérieur, et ayant, au niveau d'une partie terminale postérieure (11) d'elle-même, ledit deuxième trou de pénétration ayant un diamètre plus important que celui dudit premier trou de pénétration,
**caractérisée en ce que** ladite tête est un élément cylindrique creux (15) constitué, à une extrémité antérieure, par deux parois annulaires (15a) agencées concentriquement, lesdites parois (15a) dudit élément cylindrique creux (15) pouvant être engagées respectivement dans et autour de la partie terminale postérieure (11) de ladite virole (1).

2. Tête d'injection pour produit adhésif selon la revendication 1,
**caractérisée en ce que** la cavité séparant les deux parois annulaires de ladite structure à paroi double (15a) se termine à son extrémité postérieure par une paroi transversale (15b).

3. Tête d'injection pour produit adhésif selon l'une ou l'autre des revendications 1 et 2,
**caractérisée en ce que** le canal traversant dudit élément cylindrique creux (15) comprend une partie antérieure et une partie postérieure, la partie antérieure ayant un diamètre intérieur inférieur à la partie postérieure, lesdites deux parties étant divisées par une partie tronconique (15c).

4. Tête d'injection pour produit adhésif selon l'une quelconque des revendications précédentes,
**caractérisée en ce que** l'extrémité postérieure du canal traversant dudit élément cylindrique creux (15) comporte un orifice de réception d'adhésif de forme tronconique.

5. Tête d'injection pour produit adhésif selon l'une quelconque des revendications précédentes,
**caractérisée en ce que** ladite tête comporte à son extrémité postérieure une bride (15d) en forme de disque afin d'engager l'extrémité postérieure de ladite virole (1).
